# EUROPÄISCHE PATENTSCHRIFT

(11) **EP 0 890 583 B1**
(45) Veröffentlichungstag und Bekanntmachung des Hinweises auf die Patenterteilung: **29.10.2003**
(21) Anmeldenummer: 98112260.9
(22) Anmeldetag: 02.07.1998
(51) Int. Cl.: C08F 8/06

(54) **Verfahren zur Oxidation von Polyethylenwachsen**
Process for the oxidation of polyethylene waxes
Procédé d'oxydation de cires de polyéthylènes

(30) Priorität: 11.07.1997 DE 19729835; 13.03.1998 DE 19810890
(43) Veröffentlichungstag der Anmeldung: 13.01.1999
(73) Patentinhaber: Clariant GmbH, 65929 Frankfurt am Main (DE)
(72) Erfinder: Hohner, Gerd, Dr., 86368 Gersthofen (DE)

(56) Entgegenhaltungen:
- EP-A- 0 321 851
- EP-A- 0 487 278
- DE-A- 3 047 915
- DE-B- 1 301 094
- FR-A- 1 360 659
- FR-A- 2 101 828
- FR-A- 2 497 513
- US-A- 4 011 380

## Beschreibung

Die Erfindung betrifft ein Verfahren zur Herstellung polarer Wachsprodukte durch Oxidation unpolarer, mit Hilfe von Metallocenkatalysatoren hergestellter Polyethylenwachse. Unter dem Begriff "Polyethylenwachse" werden im folgenden Ethylenhomopolymerisate sowie Copolymerisate des Ethylens mit α-Olefinen der Kettenlänge C₃-C₁₈ mit einer Schmelzviskosität, gemessen bei 140°C, zwischen 5 und 20000 mPa.s verstanden.

Es ist bekannt, daß unpolare Polyethylenwachse zu polaren Wachsen oxidiert werden können. Derartige Wachsoxidate und Verfahren zu ihrer Herstellung sind beispielsweise in US 3 278 513, DE-A-1 227 654, DE-A-2 241 057 und DD 283 730 beschrieben. Die Umsetzung der unpolaren Ausgangsmaterialien erfolgt im allgemeinen durch Behandlung ihrer Schmelzen mit Sauerstoff oder sauerstoffhaltigen, gegebenenfalls zusätzlich ozonhaltigen Gasgemischen.

Als Hilfsmittel zum Starten der Oxidationsreaktion können dem Rohstoff oxidierte Polyethylenwachse zugesetzt werden. Beispielsweise ist in US 3692877 der Zusatz von niedrigmolekularen oxidierten Polyolefinen mit Molmassen von 500 bis 10000 beschrieben. Derartige oxidierte Polyolefine enthalten langkettige Carbonsäuren mit durchschnittlichen Kettenlängen größer als 35.

Abhängig von den Bedingungen und der Dauer der Reaktion können unterschiedliche Oxidationsgrade eingestellt werden. Die entstehenden Reaktionsprodukte enthalten eine Vielfalt sauerstoffunktioneller Gruppen, z.B. Carboxyl-, Ester-, Carbonyl- und Hydroxylgruppen. Zur Charakterisierung des Oxidationsgrads wird gewöhnlich die Säurezahl herangezogen, die ein Maß für die Konzentration der vorhandenen Carboxylfunktionen ist.

Die so gewonnenen oxidierten Polyolefinwachse finden Anwendung u.a. als Hilfsmittel für die Kunststoffverarbeitung oder zur Herstellung von wässrigen Dispersionen z.B. für den Einsatz auf dem Pflegemittelsektor, in der Textilverarbeitung, zur Hydrophobierung und zur Beschichtung von Zitrusfrüchten.

Die als Rohstoff für die Oxidation verwendeten Polyethylenwachse werden beispielsweise durch thermischen Abbau von hochmolekularem Polyethylen oder durch radikalische Polymerisation von Ethylen nach dem Hochdruckverfahren gewonnen, weiterhin durch metallkatalysierte Homopolymerisation von Ethylen oder metallkatalysierte Copolymerisation von Ethylen mit α-Olefinen. Als Metallkatalysatoren kommen dabei solche vom Ziegler-Natta-Typ oder neuerdings auch sogenannte Metallocenverbindungen in Frage. Letztere enthalten Titan-, Zirkonium- oder Hafniumatome als aktive Spezies und werden in der Regel in Kombination mit Cokatalysatoren, z.B. Organoaluminium- oder Borverbindungen, bevorzugt Aluminoxanverbindungen eingesetzt. Die Polymerisation erfolgt bei Bedarf in Gegenwart von Wasserstoff als Molmassenregler.

Entsprechende, mit Metallocenkatalysatoren arbeitende Polymerisationsverfahren sind z.B. in EP-A-321 851, EP-A-381 852, EP-A-571 882 und EP-A-602 509 beschrieben. Metallocenkatalysatoren zeigen im Vergleich zu Ziegler-Natta-Systemen extrem hohe Aktivitäten. Die erforderlichen Katalysator-Einsatzmengen sind so gering, daß sie bei einer oxidierenden Weiterverarbeitung der Wachse nicht störend in Erscheinung treten. Eine - mit beträchtlichem Aufwand verbundene - Zersetzung und Abtrennung der Metallocenkatalysatoren kann unterbleiben. Die metallocenkatalysierte Polymerisation gestattet die Synthese von Polymerwachsen mit breit variablen, z.T. neuartigen Eigenschaftskombinationen, so daß spezielle anwendungstechnische Erfordernisse in gezielterer Weise eingestellt werden können als dies mit herkömmlichen Polymerisationsverfahren möglich ist. Entsprechendes gilt in gleicher Weise auch für die aus solchen Polymerwachsen zugänglichen Oxidationsprodukte.

Als nachteilig bei der Oxidation von mit Metallocenen hergestellten wachsartigen Polyolefinen hat sich die Bildung hochmolekularer, im Extremfall gelartig vernetzter Nebenprodukte herausgestellt. Dieser Umstand kann im Verlauf der Umsetzung zu einer Erhöhung der Viskosität des Reaktionsgutes führen, wodurch dessen Durchmischung mit Sauerstoff behindert und die Reaktionsgeschwindigkeit herabgesetzt wird. Darüber hinaus kommt es zu Belagsbildungen an den Wandungen und Einbauten des Oxidationsreaktors und zu einer Beeinträchtigung der anwendungstechnischen Qualität der Produkte, beispielsweise der Farbe. Dieses Verhalten wird insbesondere dann beobachtet, wenn die Umsetzung in ökonomisch vorteilhafter Weise unter Verwendung von Luft als Oxidationsmittel und bei Normaldruck oder geringem Überdruck durchgeführt wird.

Es wurde nun überraschend gefunden, daß die geschilderten Nachteile dadurch vermieden werden können, daß man dem Reaktionsgemisch vor Beginn oder im Anfangsstadium der Oxidation in geringer Konzentration anorganische oder organische Säuren zusetzt.

Gegenstand der Erfindung ist daher ein Verfahren zur Oxidation von mittels Metallocenkatalysatoren hergestellten Ethylenhomo- und Copolymerwachsen in der Schmelze mittels Sauerstoff oder Sauerstoff enthaltenden Gasgemischen, dadurch gekennzeichnet, daß die Oxidation unter Zusatz ein- oder mehrwertiger anorganischer Säuren oder ein- oder mehrwertiger Carbonsäuren mit 1-6 bzw. 2-6 C-Atomen und einer Zusatzmenge, bezogen auf den Wachsrohstoff, von 0.01 bis 1.0 Gew.-% durchgeführt wird.

Als Polyethylenwachs-Rohstoff kommen Homopolymerisate des Ethylens oder Copolymerisate des Ethylens mit einem oder mehreren α-Olefinen in Frage. Als α-Olefine werden lineare oder verzweigte Olefine mit 3-18 C-Atomen eingesetzt. Beispiele hierfür sind Propen, 1-Buten, 1-Hexen, 1-Octen oder 1-Octadecen, weiterhin Styrol. Bevorzugt sind Ethylen-Homopolymere und Copolymere des Ethylens mit Propen oder 1-Buten. Die Copolymeren bestehen zu 70-99.9 Gew.-%, bevorzugt zu 80-99 Gew.-% aus Ethylen.

Beispiele für die zur Herstellung der Polyolefinwachsrohstoffe verwendeten Metallocenkatalysatoren sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)-zirkoniumdichlorid,
Dimethylsilyl-bis-1-(2-methyl-4-ethylindenyl)-zirkoniumdichlorid,
Dimethylsilyl-bis-1-(2-methyl-4-i-propylindenyl)-zirkoniumdichlorid,
Dimethylsilyl-bis-1-(2-methyl-4-phenylindenyl)-zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
lsopropyliden(9-fluorenyl)(cyclopentadienyl)zirkoniumdichlorid,
Phenylmethylsilyl-bis-1-(2-methyl-indenyl)zirkoniumdichlorid.

Die Oxidation der Polyolefinwachse kann diskontinuierlich oder kontinuierlich durchgeführt werden. Im Falle der diskontinuierlichen Arbeitsweise wird in den schmelzflüssigen Wachsrohstoff, nötigenfalls unter Abführung der Reaktionswärme, solange Sauerstoff oder sauerstoffhaltiges Gas eingeleitet, bis der gewünschte Oxidationsgrad erreicht ist. Der erfindungsgemäße Säurezusatz kann vor oder nach Beginn der Begasung erfolgen. Als Oxidationsmittel dienen Sauerstoff oder sauerstoffhaltige Gasgemische, bevorzugt Luft. Die Reaktionstemperaturen liegen üblicherweise im Bereich zwischen der Schmelztemperatur des Rohstoffs und 200°C, vorzugsweise zwischen 120 und 180°C, besonders bevorzugt zwischen 140 und 170°C. Die Reaktion kann bei atmosphärischem Druck oder unter Anwendung von Überdruck durchgeführt werden. Bevorzugt sind Drucke zwischen 1 und 3 bar. Als Säuren kommen ein- oder mehrwertige anorganische oder organische Säuren in Frage. Beispiele für anorganische Säuren sind Salz-, Schwefel- oder Phosphorsäure. Als Beispiele für organische Säuren seien Monocarbonsäuren der Kettenlänge 1 bis 4 genannt, z. B. Ameisen-, Essig-, Propion- oder Buttersäure, ferner mehrwertige Carbonsäuren mit 2-6 C-Atomen wie Oxalsäure, Malonsäure, Bernsteinsäure, Maleinsäure, Äpfelsäure oder Citronensäure. Unter den anorganischen Säuren ist Phosphorsäure, unter den Carbonsäuren sind Monocarbonsäuren, insbesondere Essig- und Propionsäure bevorzugt. Besonders bevorzugt ist die Verwendung von Essigsäure. Der Säurezusatz erfolgt, bezogen auf den eingesetzten Wachsrohstoff, in einer Menge von 0.01 bis 1 Gew.-%, bevorzugt zwischen 0.05 und 0.5 Gew.-%..

Im Falle einer kontinuierlichen Arbeitsweise werden Wachs, Oxidationsmittel und Säure gemeinsam durch ein geeignetes Reaktionsgefäß, beispielsweise einen Blasensäulenreaktor geleitet und das dabei gebildete Wachsprodukt abgezogen. Im übrigen gelten die oben genannten Bedingungen.

Die Erfindung wird durch die folgenden Beispiele erläutert, ohne auf diese Beispiele eingeschränkt zu sein.

Die Schmelzviskositäten der nachfolgend beschriebenen Wachse wurden nach DIN 51562 mit einem Rotationsviskosimeter, die Tropfpunkte nach DIN 51801/2, die Säure-/Verseifungszahlen nach DIN 53402/401 und die Dichten nach DIN 53479 bei 20°C bestimmt. Die Farbbestimmung wurde bei Raumtemperatur visuell anhand eines Satzes von Vergleichsmustern vorgenommen (Note 1: farblos, Note 6: gelbbraun).

Entsprechend der in EP-A-571882 beschriebenen Arbeitsweise wurden als Rohstoffe für die nachfolgende Oxidation Polyethylenwachse unter Verwendung von Metallocenkatalysatoren hergestellt. Die Kennzahlen dieser Wachse und die eingesetzten Katalysatoren sind in nachfolgender Tabelle aufgelistet:

**Tabelle 1**

| Eingesetzte Wachsrohstoffe | | | | | |
|---|---|---|---|---|---|
| Wachs-Nr. | Wachstyp | Metallocenkatalysator | Schmelzviskosität/140°C mPas | Tropfpunkt °C | Dichte g/cm³ |
| 1 | Ethylen-Propen-Copolymer | Bis(n-butylcyclopentadienyl)zirkoniumdichlorid | 530 | 113 | 0.940 |
| 2 | Ethylen-Homopolymer | Bis(methylcyclopentadienyl)zirkoniumdichlorid | 620 | 126 | 0.960 |
| 3 | Ethylen-Homopolymer | Bis(methylcyclopentadienyl)zirkoniumdichlorid | 790 | 125 | 0.962 |
| 4 | Ethylen-Propen-Copolymer | Ethylen-bis-1-tetrahydroindenylzirkoniumdichlorid | 610 | 105 | 0.925 |
| 5 | Ethylen-Homopolymer | Dimethylsilyl-bis-1-(2-methyl-4,5-benzoindenyl)zirkoniumdichlorid | 530 | 127 | 0.959 |

### Beispiel 1

In einem mit Thermometer, schnellaufendem Propellerrührer und einem Tauchrohr als Gaseinlaß ausgestatteten 2 l-Vierhalskolben wurde eine Mischung aus 700 g des Wachses 1 aus Tabelle 1 und 35 g eines oxidierten Polyethylenwachses mit einer Säurezahl von 25 mg KOH/g aufgeschmolzen. Nach Erreichen einer Innentemperatur von 140°C wurden 0.7 g Essigsäure zugesetzt, das Rührwerk mit 4000 Umdrehungen/min in Betrieb genommen und ein Luftstrom von 200 l/h in die Wachsschmelze eingeleitet. Die Reaktionstemperatur stieg auf maximal 165°C an. In Abständen von 2 h wurden Proben zur Bestimmung der Viskosität entnommen. Die Reaktion wurde nach 8 h beendet. Das gebildete Produkt zeigte eine Säurezahl von 17 mg KOH/g, eine Viskosität von 180 mPa.s bei 140°C und eine Farbnote von 1-2.

Die Viskositätswerte der während der Reaktion entnommenen Probe waren wie folgt:

| Probenahme nach | Viskosität/140°C mPa.s |
|---|---|
| 0 h | 530 |
| 2 h | 320 |
| 4 h | 230 |
| 6 h | 190 |
| 8 h | 180 |
| (Endprodukt) | |

### Beispiel 2

Es wurde eine Oxidation analog Beispiel 1 durchgeführt mit dem Unterschied, daß dem Reaktionsgemisch statt der Essigsäure 0.6 g Phosphorsäure zugesetzt wurde. Nach 8 h wurde ein Wachsoxidat mit einer Säurezahl von 18 mg KOH/g, einer Viskosität von 250 mPa.s bei 140°C und einer Farbnote von 2 erhalten.

Die Viskositätswerte der während der Reaktion entnommenen Probe waren wie folgt:

| Probenahme nach | Viskosität/140°C mPa.s |
|---|---|
| 0 h | 530 |
| 2 h | 340 |
| 4 h | 280 |
| 6 h | 260 |
| 8 h | 250 |
| (Endprodukt) | |

### Vergleichsbeispiel 1

Es wurde eine Oxidation analog Beispiel 1 durchgeführt, wobei auf den Zusatz von Essigsäure verzichtet wurde. Das nach 8 h Oxidationszeit erhaltene Produkt zeigte eine Viskosität von 830 mPa.s bei 140°C, eine Säurezahl von 15 mg KOH/g und eine Farbnote von 3.

Die Viskositätswerte der während der Reaktion entnommenen Probe waren wie folgt:

| Probenahme nach | Viskosität/140°C mPa.s |
|---|---|
| 0 h | 530 |
| 2 h | 430 |
| 4 h | 380 |
| 6 h | 510 |
| 8 h | 830 |
| (Endprodukt) | |

Vergleichsbeispiel 1 zeigt, daß die Viskosität während der Oxidation nach anfänglichem Abfall wieder ansteigt. Die Viskosität des Endproduktes liegt deutlich über der des Einsatzstoffs. in Gegenwart von Essig- oder Phosphorsäure wird dagegen ein kontinuierlicher Viskositätsabfall bis zum Reaktionsende beobachtet; die Reaktionsgeschwindigkeit ist höher (höhere Säurezahl) und die Produktfarbe heller.

### Beispiel 3

700 g des Wachses 2 aus Tabelle 1 wurde mit 35 g eines oxidierten Polyethylenwachses mit einer Säurezahl von 25 mg KOH/g und 0.9 g Propionsäure vermischt und unter Verwendung der in Beispiel 1 beschriebenen Apparatur unter den dort angegebenen Bedingungen oxidiert. Nach 8 h wurde ein Wachsoxidat mit einer Säurezahl von 18 mg KOH/g, einer Verseifungszahl von 40 mg KOH/g, einer Schmelzviskosität von 280 mPa.s bei 140°C, einem Tropfpunkt von 112°C und einer Farbnote von 1-2 erhalten.

### Vergleichsbeispiel 2

Die Oxidation des gleichen Polyethylenwachses nach dem in Beispiel 2 beschriebenen Verfahren, jedoch ohne Zusatz von Propionsäure, führte nach 8 h zu einem Wachsoxidat mit der Säurezahl 14 mg KOH/g, einer Schmelzviskosität bei 140°C von 650 mPa.s und einer Farbnote von 3.

### Beispiel 4

700 g des Wachses 3 aus Tabelle 1 wurde entsprechend Beispiel 1 in Gegenwart von 35 g eines oxidierten Polyethylenwachses mit einer Säurezahl von 25 mg KOH/g und unter Zusatz von 0.7 g Essigsäure oxidiert. Nach 7 h wurde ein Produkt mit einer Säurezahl von 16, einer Schmelzviskosität bei 140°C von 510 mPa.s und einer Farbnote von 2 erhalten.

### Vergleichsbeispiel 3

Eine entsprechend Beispiel 3, jedoch ohne Zusatz von Essigsäure durchgeführte Oxidation mußte nach 6.5 h bei einer Säurezahl von 9 mg KOH/g wegen beginnender Vernetzung des Reaktionsgutes abgebrochen werden.

### Beispiel 5

700 g des Wachses 4 aus Tabelle 1 wurde mit 35 g eines oxidierten Polyethylenwachses mit einer Säurezahl von 25 mg KOH/g und 0.9 g Essigsäure vermischt und unter Verwendung der in Beispiel 1 beschriebenen Apparatur unter den dort angegebenen Bedingungen oxidiert. Nach 7 h wurde ein Wachsoxidat mit einer Säurezahl von 21 mg KOH/g, einer Schmelzviskosität von 280 mPa.s bei 140°C und einer Farbnote von 1-2 erhalten.

### Vergleichsbeispiel 4

Die Oxidation des gleichen Polyethylenwachses nach dem in Beispiel 5 beschriebenen Verfahren, jedoch ohne Zusatz von Essigsäure, führte nach 7 h zu einem Wachsoxidat mit der Säurezahl 18 mg KOH/g, einer Schmelzviskosität bei 140°C von 590 mPa.s und einer Farbnote von 3.

### Beispiel 6

700 g des Wachses 5 aus Tabelle 1 wurde mit 35 g eines oxidierten Polyethylenwachses mit einer Säurezahl von 25 mg KOH/g und 0.7 g Essigsäure vermischt und unter Verwendung der in Beispiel 1 beschriebenen Apparatur unter den dort angegebenen Bedingungen oxidiert. Nach 8.5 h wurde ein Wachsoxidat mit einer Säurezahl von 22 mg KOH/g, einer Schmelzviskosität von 220 mPa.s bei 140°C und einer Farbnote von 1-2 erhalten.

### Vergleichsbeispiel 5

Die Oxidation des gleichen Polyethylenwachses nach dem in Beispiel 5 beschriebenen Verfahren, jedoch ohne Zusatz von Essigsäure, führte nach 8.5 h zu einem Wachsoxidat mit der Säurezahl 18 mg KOH/g, einer Schmelzviskosität bei 140°C von 590 mPa.s und einer Farbnote von 3.

## Patentansprüche

1. Verfahren zur Oxidation von mit Metallocenkatalysatoren hergestellten Polyethylenwachsen in der Schmelze mittels Sauerstoff oder Sauerstoff enthaltenden Gasgemischen, **dadurch gekennzeichnet, daß** die Oxidation des Polyethylenwachses unter Zusatz ein- oder mehrwertiger anorganischer Säuren oder ein- oder mehrwertiger Carbonsäuren mit 1 bis 6 bzw. 2 bis 6 C-Atomen durchgeführt wird.

2. Verfahren nach Anspruch 1, **dadurch gekennzeichnet, daß** es sich bei dem Polyethylenwachs um Homo- oder Copolymere des Ethylens mit einem oder mehreren C₃-C₁₈-α-Olefinen handelt.

3. Verfahren nach Anspruch 1, **dadurch gekennzeichnet, daß** es sich bei dem Polyethylenwachs um Copolymere des Ethylens mit Propen oder 1-Buten handelt.

4. Verfahren nach Anspruch 1, **dadurch gekennzeichnet, daß** als Säure Salz-, Schwefel- oder Phosphorsäure oder eine ein- oder mehrwertige Carbonsäure mit 1 bis 4 bzw. 2 bis 4 C-Atomen verwendet wird.

5. Verfahren nach Anspruch 1, **dadurch gekennzeichnet, daß** als Säure Phosphorsäure oder Essigsäure verwendet wird.

6. Verfahren nach Anspruch 1, **dadurch gekennzeichnet, daß** die Oxidation mit Luft als Oxidationsmittel bei Drücken zwischen 1 und 3 bar durchgeführt wird.

7. Verfahren nach Anspruch 1, **dadurch gekennzeichnet, daß** die Reaktionstemperatur zwischen 140 und 170°C liegt.

8. Verfahren nach Anspruch 1, **dadurch gekennzeichnet daß** der Säurezusatz, bezogen auf das Polyethylenwachs, in einer Menge von 0,01 bis 1,0 Gew.-% erfolgt.

9. Verfahren nach Anspruch 1, **dadurch gekennzeichnet, daß** 0,05 bis 0,5 Gew.-% Säure eingesetzt werden.

10. Verfahren nach Anspruch 1, **dadurch gekennzeichnet, daß** die Reaktion kontinuierlich in einem Blasensäulenreaktor durchgeführt wird.

## Claims

1. A process for the oxidation, in the melt by means of oxygen or oxygen-containing gas mixtures, of polyethylene waxes prepared using metallocene catalysts, wherein the oxidation of the polyethylene wax is carried out with addition of monobasic or polybasic inorganic acids or monobasic or polybasic carboxylic acids having from 1 to 6 or from 2 to 6 carbon atoms.

2. The process as claimed in claim 1, wherein the polyethylene wax is a homopolymer of ethylene or a copolymer of ethylene with one or more C₃-C₁₈-α-olefins.

3. The process as claimed in claim 1, wherein the polyethylene wax is a copolymer of ethylene with propene or 1-butene.

4. The process as claimed in claim 1, wherein the acid used is hydrochloric, sulfuric or phosphoric acid or a monobasic or polybasic carboxylic acid having from 1 to 4 or from 2 to 4 carbon atoms.

5. The process as claimed in claim 1, wherein the acid used is phosphoric acid or acetic acid.

6. The process as claimed in claim 1, wherein the oxidation is carried out using air as oxidant at a pressure of from 1 to 3 bar.

7. The process as claimed in claim 1, wherein the reaction temperature is from 140 to 170°C.

8. The process as claimed in claim 1, wherein the acid is added in an amount of from 0.01 to 1.0% by weight, based on the polyethylene wax.

9. The process as claimed in claim 1, wherein from 0.05 to 0.5% by weight of acid is used.

10. The process as claimed in claim 1, wherein the reaction is carried out continuously in a bubble column reactor.

## Revendications

1. Procédé pour l'oxydation de cires de polyéthylène, préparées à l'aide de catalyseurs de type métallocènes, à l'état fondu par de l'oxygène ou des mélanges gazeux renfermant de l'oxygène, **caractérisé en ce qu'**on met en oeuvre l'oxydation de la cire de polyéthylène sous ajout d'acides inorganiques mono- ou polyvalents ou d'acides carboxyliques mono- ou polyvalents présentant 1 à 6 ou 2 à 6 atomes de carbone.

2. Procédé selon la revendication 1, **caractérisé en ce qu'**il s'agit, pour la cire de polyéthylène, d'homo- ou de copolymères de l'éthylène avec une ou plusieurs α-oléfines en C₃-C₁₈.

3. Procédé selon la revendication 1, **caractérisé en ce qu'**il s'agit pour la cire de polyéthylène de copolymères de l'éthylène avec le propène ou le 1-butène.

4. Procédé selon la revendication 1, **caractérisé en ce qu'**on utilise en tant qu'acide l'acide chlorhydrique, l'acide sulfurique ou l'acide phosphorique ou un acide carboxylique mono- ou polyvalent présentant 1 à 4 ou 2 à 4 atomes de carbone.

5. Procédé selon la revendication 1, **caractérisé en ce qu'**on utilise en tant qu'acide l'acide phosphorique ou l'acide acétique.

6. Procédé selon la revendication 1, **caractérisé en ce qu'**on réalise l'oxydation avec de l'air en tant qu'agent oxydant sous une pression comprise entre 1 et 3 bars.

7. Procédé selon la revendication 1, **caractérisé en ce que** la température réactionnelle est comprise entre 140 et 170°C.

8. Procédé selon la revendication 1, **caractérisé en ce qu'**on ajoute l'acide, par rapport à la cire de polyéthylène, dans une quantité de 0,01 à 1,0 % en poids.

9. Procédé selon la revendication 1, **caractérisé en ce qu'**on utilise de 0,05 à 0,5 % en poids d'acide.

10. Procédé selon la revendication 1, **caractérisé en ce qu'**on met en oeuvre la réaction en continu dans un réacteur à colonne à bulles.
